# EUROPÄISCHE PATENTSCHRIFT

(11) **EP 2 798 961 B1**
(45) Veröffentlichungstag und Bekanntmachung des Hinweises auf die Patenterteilung: **25.07.2018**
(21) Anmeldenummer: 14166669.3
(22) Anmeldetag: 30.04.2014
(51) Int. Cl.: A22C 11/02

(54) **Vorrichtung zum Herstellen eines Wurststranges**
Device for producing a string of sausages
Dispositif de fabrication d'un chapelet de saucisses

(30) Priorität: 03.05.2013 DE 202013004093 U
(43) Veröffentlichungstag der Anmeldung: 05.11.2014
(73) Patentinhaber: VEMAG Maschinenbau GmbH, 27283 Verden/Aller (DE)
(72) Erfinder: Thelen, Christoph, 21255 Dohren (DE); Meininger, Thorsten, 27283 Verden (DE)
(74) Vertreter: Eisenführ Speiser

(56) Entgegenhaltungen:
- WO-A1-03/034828
- WO-A1-2006/072735
- WO-A1-2011/029435
- DE-T2- 60 218 513
- US-A1- 2004 089 968
- US-A1- 2012 321 752

## Beschreibung

Die vorliegende Erfindung bezieht sich auf eine Vorrichtung und ein Verfahren zum Herstellen eines Stranges aus einer pastösen Masse, wie Wurstbrät oder dergleichen Produkte.

Die Erfindung betrifft insbesondere eine Vorrichtung zum Herstellen eines Wurststranges mit zumindest einem Extrusionskopf, der wenigstens eine Förderleitung für die zu einem Strang zu formende pastöse Masse aufweist, wobei die Förderleitung einen Einlass und einen Auslass aufweist, und der eine Aufnahmekammer für ein auf den Strang aufzubringendes Hüllmaterial aufweist, wobei die Aufnahmekammer einen Einlauf für das Hüllmaterial und einen Auslauf zu Aufbringen des Hüllmaterials auf die Strangoberfläche aufweist.

Vorrichtungen und Verfahren vorbezeichneter Gattung werden üblicherweise zur Herstellung von Wurststrängen oder vereinzelten Würstchen eingesetzt, deren äußere Hülle anstelle aus einem Naturdarm aus Kollagen oder Alginat erzeugt wird. Die pastöse Masse, vorzugsweise Wurstbrät oder dergleichen fleischhaltigen Produkte, wird üblicherweise in einem Fülltrichter einer Herstellungsmaschine für Würstchen, wie z. B. einer Füllmaschine bereitgehalten und über einen Extrusionskopf zu einem bevorzugt kontinuierlich geförderten und damit gleichmäßigen Wurstbrät-Strang verarbeitet. Um dem Wurstbrät-Strang eine gewünschte Festigkeit zu verleihen und damit ein ungewolltes Brechen des Stranges zu vermeiden bzw. eine Vereinfachung bei der Weiterbearbeitung durch z.B. eine Abteileinrichtung zu erreichen, welch die Würstchen von dem Strang vereinzelt, wird auf die Strangoberfläche ein Hüllmaterial aufgebracht, wie z. B. Kollagen oder Alginat. Kollagen und Alginat sind fließfähige Hüllmaterialien, die nach dem Aufbringen auf die Strangoberfläche nach einer kurzen Zeitdauer verfestigen und eine feste Hülle auf dem Wurstbrät-Strang ausbilden. Um das Verfestigen des auf der Strangoberfläche aufgetragenen bzw. aufgebrachten Hüllmaterials zu beschleunigen und damit die Weiterverarbeitung des Stranges aus der pastösen Masse zu vereinfachen, wird das Hüllmaterial, welches nunmehr die äußere Oberfläche des Stranges ausbildet, mit einem das Hüllmaterial verfestigenden Auftragmittel in Kontakt gebracht. Durch das Auftragmittel, welches z. B. eine Kalziumlösung umfasst, wird das Hüllmaterial in kürzester Zeit verfestigt und damit eine relativ feste Hülle um den Wurstbrät-Strang ausgebildet.

Bekannte Vorrichtungen weisen zumindest einen Extrusionskopf mit wenigstens einer Förderleitung für die zu einem Strang zu formende pastöse Masse auf. Die Förderleitung ist mit einem Einlass für die noch unförmige, pastöse Masse und mit einem Auslass für die innerhalb der Förderleitung dann zu einem Strang geformte Masse ausgerüstet. Dem Endbereich der Förderleitung ist der Auslauf für das auf die Oberfläche des Stranges aufzubringende Hüllenmaterial zugeordnet. Des weiteren weisen die beispielsweise aus der EP 1 371 293 B1 oder der WO 99/22600 A bekannten Vorrichtungen zum Herstellen eines Stranges aus einer pastösen Masse eine Auftragseinrichtung zum Aufbringen eines das Hüllmaterial verfestigenden Auftragmittels auf den Wurststrang auf, wobei die Auftragseinrichtung in Förderrichtung stromabwärts des Extrusionskopfes angeordnet ist. Die Auftragseinrichtung ist häufig unmittelbar hinter dem Extrusionskopf angeordnet, damit eine frühzeitige Verfestigung des Hüllmaterials bewirkt ist und damit verbunden geringe bis gar keine Wartezeiten für die Weiterverarbeitung in Kauf zu nehmen sind. Durch die EP 1 371 293 B1 ist beispielsweise offenbart, eine Auftragseinrichtung aus einem zu einer Wendel aufgewickelten Rohr vorzusehen, mit dem eine Ringdusche für den durch den freien Querschnitt der aufgewickelten Rohrleitung geführten Wurststrang ausgebildet ist. Die mit den bekannten Vorrichtungen und Verfahren erzeugten Würstchen haben stets eine gerade Ausrichtung nach der Herstellung. Die erzeugten Würstchen lassen sich zwar problemlos verformen, nehmen jedoch immer wieder ihre gerade Ausrichtung ein, wenn die auf die Würstchen einwirkende Kraft wegfällt. Derartig gerade ausgebildeten Würstchen fehlt es im Gegensatz zu Wurststrängen, die in Naturdärme eingefüllt werden, an der natürlichen, gebogenen Formgebung.

In WO 2006/072735 A1 ist ferner eine Vorrichtung offenbart, mit der gekrümmte Würste hergestellt werden können. Diese Vorrichtung nutzt ein gekrümmtes Rohr, um Fett in der Wurst so anzuordnen, dass sich die Wurst beim Erhitzen krümmt. Es ist auch offenbart, dass mittels spezieller Düsen ein verfestigendes Mittel auf die Wurst aufgebracht werden kann.

Aus DE 602 18 513 T2 ist ferner ein Verfahren für die Oberflächenbehandlung von Nahrungsmittelextrusionen bekannt, welches die Schritte umfasst: Einführen einer Nahrungsmittelextrusion in eine Behandlungs-Rohrleitung zur Oberflächenstabilisierung der Nahrungsmittelextrusion; in einen ersten Abschnitt der Rohrleitung unter Besprühen der Oberfläche der Nahrungsmittelextrusion mit einem Stabilisator in Form eines Gels; und in einen zweiten Abschnitt der Rohrleitung unter Besprühen der Oberfläche der Nahrungsmittelextrusion mit einem Katalysator für den Stabilisator.

Der Erfindung liegt die Aufgabe zugrunde, eine Vorrichtung und ein Verfahren zum Herstellen eines Stranges aus einer pastösen Masse aufzuzeigen, mit denen eine naturdarmähnliche Formgebung des Stranges und der daraus hergestellten Würstchen erreicht ist.

Die Erfindung löst die ihr zugrunde liegende Aufgabe bei einer Vorrichtung der vorbezeichneten Gattung gemäß Anspruch 1 und 2 dadurch, dass in Förderrichtung hinter dem Extrusionskopf eine Umlenkeinrichtung angeordnet ist, die dazu eingerichtet ist, den mit Hüllmaterial überzogenen Strang in eine vorbestimmte Krümmung zu bringen. Die erfindungsgemäße Umlenkeinrichtung ist dazu eingerichtet, den mit Hüllmaterial überzogenen Strang, nachdem der Strang aus dem Extrusionskopf ausgetreten ist, entlang eines vorgegebenen, gekrümmten Bahnabschnittes zu führen. Während der Strang entlang des gekrümmten Bahnabschnittes geführt wird, verfestigt dieser. So können einfach gekrümmte Stränge hergestellt werden, die zu gekrümmten Würstchen weiter verarbeitet werden.

Der Erfindung liegt die Erkenntnis zugrunde, dass während der Strang entlang eines vorgegebenen gekrümmten Bahnabschnittes geführt wird, eine Verfestigung des beispielsweise als Hüllmaterial eingesetzten Alginats oder Kollagens erzielt werden kann, so dass der Wurststrang bzw. die einzelnen, abgeteilten Würstchen ohne Zugbelastung auf ihre Enden eine gebogene Form aufweisen, die einem Würstchen mit Naturdarm sehr ähnlich ist. Durch das im gekrümmten Zustand des Stranges ausgehärtete Hüllmaterial erhält der Strang bzw. die daraus hergestellten Würstchen vorzugsweise ein Formgedächtnis. Auch wenn die Würstchen gerade gezogen bzw. gestreckt werden, gehen diese bei Wegnahme der Kraft in ihre gebogene bzw. gekrümmte Ausgangsform zurück.

Erfindungsgemäß ist vorgesehen, dass die Umlenkeinrichtung einen gekrümmten Rohrleitungsabschnitt aufweist. Der Einsatz eines gekrümmten Rohrleitungsabschnitts stellt eine konstruktiv vorteilhafte Möglichkeit zur Ausbildung der Umlenkeinrichtung dar. Mit einem gekrümmten Rohrleitungsabschnitt lässt sich der aus dem Extrusionskopf austretene Strang, auf dessen äußere Oberfläche das vorzugsweise aus Alginat und Kollagen bestehende Hüllmaterial aufgebracht ist, auf vorteilhafte Weise entlang eines gekrümmten Bahnabschnittes führen bzw. eine Krümmung des Stranges erreichen.

Die Krümmung des Rohrleitungsabschnittes weist einen Winkel von wenigstens 45° auf, wodurch der aus dem Extrusionskopf austretende Strang um ein ausreichendes Winkelmaß gekrümmt wird und damit ein ausreichend langer Bahnabschnitt erzeugt ist, der zum Aushärten des Hüllmateriales ausreicht. Bevorzugt weist der Rohrleitungsabschnitt eine Krümmung von wenigstens etwa 270° auf, wodurch sichergestellt ist, dass der erzeugte Strang aus pastöser Masse für die Weiterverarbeitung erst wieder in eine gerade Ausrichtung überführt wird, wenn das Hüllmaterial vorzugsweise auf der Strangoberfläche ausgehärtet ist. Ein unbeabsichtigtes Zurückdehnen des Stranges mit einer noch unverfestigten Strangoberfläche ist damit auf vorteilhafte Weise vermieden.

In einer Alternative ist vorgesehen, dass der Rohrleitungsabschnitt vorzugsweise wendel- oder schraubenförmig ausgebildet ist. Mit einem wendel- oder schraubenförmig ausgebildeten Rohrleitungsabschnitt kann auf vorteilhaft einfache Weise der Umlenkvorgang des Wurststranges entlang der vorgegebenen, gekrümmten Bahn erfolgen, wobei gleichzeitig ein vorteilhaft geringer Platzbedarf mit der vorzugsweise schraubenförmigen Ausgestaltung des Rohrleitungsabschnittes erzielt ist. Der eingesetzte schraubenförmige Rohrleitungsabschnitt führt dabei bevorzugt mindestens eine vollständige Windung um 360° aus, so dass die Richtungen von Rohreintritt und Rohraustritt parallel zueinander ausgerichtet sind, jedoch auf unterschiedlichen Höhen verlaufen. Der Rohrleitungsabschnitt weist bevorzugt eine einstückige Ausgestaltung auf.

Alternativ ist nach der Erfindung vorgesehen, dass anstelle eines schraubenförmigen Rohrleitungsabschnittes ein Rohrleitungsabschnitt eingesetzt wird, der aus zwei Rohrabschnitten gebildet ist, deren Krümmungsverläufe sich in Ebenen erstrecken, die etwa senkrecht aufeinander stehen. Mit einer derartigen Ausgestaltung des Rohrleitungsabschnittes lassen sich beliebige vorgegebene, gekrümmte Bahnabschnitte erzeugen, die der mit dem Hüllmaterial überzogene und ggf. bereits mit dem das Hüllmaterial verfestigenden Auftragmittel in Kontakt gebrachte Wurststrang bis zum Aushärten des Hüllmateriales durchläuft. Der Rohrleitungsabschnitt, welcher zur Ausbildung des gekrümmten Rohrabschnittes eingesetzt wird, kann an den Ausgang des Extrusionskopfes unmittelbar daran anschließend angeordnet sein. Alternativ ist die Eintrittsöffnung des Rohrleitungsabschnittes im Abstand zum Auslass des Extrusionskopfes angeordnet.

Erfindungsgemäß weist die Vorrichtung eine Auftragseinrichtung zum Aufbringen eines das Hüllmaterial verfestigenden Auftragmittels auf den Wurststrang auf, welche in Förderrichtung stromabwärts des Extrusionskopfes angeordnet ist. Auf diese Weise kann auf den Verfestigungsprozess des Hüllmaterials gezielt Einfluss genommen werden. Mittels der Auftragseinrichtung, welche vorzugsweise entlang eines Abschnittes der Umlenkeinrichtung angeordnet ist, wird das das Hüllmaterial verfestigende Auftragmittel auf die Strangoberfläche aufgebracht. Die Auftragseinrichtung ist dabei zweckmäßig in einem Abschnitt der Umlenkeinrichtung derart angeordnet, dass
sichergestellt ist, dass das Hüllmaterial beim Austritt aus der Umlenkeinrichtung ausgehärtet oder verfestigt ist und somit die Formgebung auf vorteilhafte Weise zwar zeitweise aber nicht mehr dauerhaft verändert werden kann.

Bevorzugt ist die Auftragseinrichtung in der ersten Hälfte, vorzugsweise im ersten Drittel der Umlenkeinrichtung angeordnet, wodurch auf vorteilhafte Weise gewährleistet ist, dass das verfestigende Auftragmittel bereits kurz nach dem Eintritt des Stranges in der Rohrleitungsabschnitt auf das Hüllmaterial aufgebracht wird und somit eine Verfestigung des Hüllmaterials bis zum Austritt des Stranges aus dem Rohrleitungsabschnitt bewirkt ist. Ein mögliches Ausführungsbeispiel der Erfindung sieht vor, dass die Auftragseinrichtung unmittelbar hinter der Eintrittsöffnung des Rohrleitungsabschnittes angeordnet ist, so dass der Aushärtvorgang bevorzugt über nahezu die gesamte Länge des gekrümmten Rohrleitungsabschnittes vorgenommen wird. Mit dem Anordnen der Auftragseinrichtung an der Umlenkeinrichtung ist zudem gewährleistet, dass der Wurststrang zunächst seine vorgegebene Krümmung eingenommen hat und das vorzugsweise als Hüllmaterial eingesetzte Alginat oder Kollagen entsprechend der Position auf der Oberfläche des Wurststranges gestaucht oder gestreckt wird, bevor das Auftragmittel mit dem Hüllmaterial in Kontakt gelangt bzw. gebracht wird.

Die Auftragseinrichtung ist erfindungsgemäß als Sprüheinrichtung für das das Hüllmaterial auf dem Strang verfestigende Auftragmittel ausgebildet, was eine vorteilhaft einfache Möglichkeit zur Ausgestaltung der Auftragseinrichtung darstellt. Das bevorzugt flüssige Auftragmittel lässt sich über eine Sprüheinrichtung vorzugsweise gleichmäßig auf die nunmehr vom Hüllmaterial ausgebildete Oberfläche des Wurststranges aufbringen. Die Sprüheinrichtung weist bevorzugt wenigstens eine auf der Innenseite des Rohrleitungsabschnittes vorstehende Düse für den Eintrag des Auftragmittels auf den durch den Rohrleitungsabschnitt geführten Wurststrang auf. Vorzugsweise weist die Auftragseinrichtung mehrere gleichmäßig über den Umfang verteilte Auftragdüsen auf.

Eine Weiterbildung der Erfindung sieht vor, dass das Auftragmittel zumindest eine Kalziumlösung umfasst, mithilfe der das Auftragmittel auf der Oberfläche des Wurststranges in relativ kurzer Zeit ausgehärtet bzw. verfestigt wird, so dass eine zügige Weiterverarbeitung des Wurststranges durch beispielsweise das Abteilen von Wurstabschnitten vom Wurststrang möglich ist.

Vorzugsweise ist der Auslauf der Aufnahmekammer unmittelbar dem Auslass der Förderleitung zugeordnet, so dass der Wurststrang unmittelbar nach dem Austritt aus dem Auslass der Förderleitung auf vorteilhafte Weise mit dem Hüllmaterial beschichtet wird. Zudem ist durch die direkte Zuordnung des Auslaufs des Aufnahmekanals zum Auslass der Förderleitung eine konstruktiv vorteilhafte Möglichkeit für die notwendige vollumfängliche Beschichtung des Stranges aus pastöser Masse erreicht. Bevorzugt erstreckt sich die Aufnahmekammer entlang mindestens eines Abschnittes der Förderleitung, wobei mittels eines Förderleitungsabschnittes die innere Kammerwandung der Aufnahmekammer ausgebildet ist. Die Aufnahmekammer bildet vorzugsweise einen Ringraum um die Förderleitung aus. Mit dem Ende der Förderleitung endet auch die innere Kammerwandung der Aufnahmekammer für das Füllmaterial.

Gemäß eines weiteren unabhängigen Aspektes der Erfindung bzw. nach einer bevorzugten Weiterbildung der Erfindung ist der Auslauf ein Ringspalt, der sich in axialer Richtung zwischen dem Endabschnitt der Förderleitung und einem im Abstand dazu angeordneten, in radialer Richtung verlaufenden Wandungsteil der Aufnahme, erstreckt , wobei der Ringspalt in Umfangsrichtung vorzugsweise ein ungleichförmiges Spaltmaß aufweist. Damit ist auf vorteilhafte Weise gewährleistet, dass das Hüllmaterial bevorzugt vollumfänglich auf die Oberfläche der Förderleitung austretenden Stranges aufgetragen wird. Der am Ende um die Förderleitung ausgebildete Ringspalt weist alternativ ein gleichmäßiges Spaltmaß auf, wodurch das Hüllmaterial mit einer gleichmäßigen Schichtdicke auf die Oberfläche des Wurststranges aufgetragen wird. Um den Auftrag auf die Strangoberfläche zu verbessern, kann es vorgesehen sein, dass das Wandungsteil der Aufnahmekammer, welches die Aufnahmekammer endseitig begrenzt, in axialer Richtung über das Ende der Förderleitung hinausragt und gleichzeitig sich in radialer Richtung nach innen verengt. Damit erhält das Hüllmaterial beim Austritt aus dem Ringspalt eine bevorzugte Richtung zur Oberfläche des Wurststranges.

Vorzugsweise sieht ein Ausführungsbeispiel der Erfindung vor, dass der Ringspalt in Umfangsrichtung ein ungleichförmiges Spaltmaß aufweist, wobei das größte und das kleinste Spaltmaß des Ringspaltes entsprechend dem Innen- und Außenradius des gekrümmten Rohrleitungsabschnittes zugeordnet ist. Bevorzugt ist das größte Spaltmaß dem Außenradius und das kleinste Spaltmaß dem Innenradius zugeordnet, so dass nach dem Austritt des Wurststanges und dem Auftragen des Hüllmaterials auf dessen Oberfläche bei dessen Umlenkung und dem damit verbundenen Biegen des Wurststranges das auf der Oberfläche des Wurststranges befindliche Hüllmaterial im Bereich des Innenradius gestaucht und im Bereich des Außenradius gedehnt wird. Der erzeugte, gebogene Wurststrang hat somit nach dem Verfestigen eine bevorzugt nahezu gleichmäßige Schichtdicke in Umfangsrichtung.

Gemäß eines weiteren unabhängigen Aspektes der Erfindung bzw. nach einem anderen Ausführungsbeispiel der Erfindung ist vorgesehen, dass die Förderleitung einen Auslass und die Aufnahmekammer einen Auslauf aufweisen, deren Auslass- bzw. Auslauföffnungen jeweils in einem Winkel kleiner oder größer 90° zur Mittenachse zu der Förderleitung ausgerichtet sind. Damit wird der aus der erfindungsgemäß ausgebildeten Vorrichtung austretende Wurststrang unmittelbar umgelenkt. Der Winkel mit dem der bereits mit Hüllmaterial überzogene Wurststrang aus dem Extrusionskopf austritt, liegt bevorzugt in einem Winkel zwischen 5° und 25° zur Mittenachse der in Förderachse stromaufwärts angeordneten Förderleitung. Der gekrümmte Rohrleitungsabschnitt, mit dem der Wurststrang umgelenkt wird, und entlang dem an einem stromaufwärtigen Abschnitt die Auftragseinrichtung für das Auftragsmittel angeordnet ist, ist vorzugsweise direkt mit der Austrittsöffnung des Extrusionskopfes verbunden, wodurch ein unmittelbarer Übertritt des Wurststranges aus dem Extrusionskopf in die Umlenkeinrichtung erfolgt.

Die Erfindung wird in besonders bevorzugter Weise weiter gebildet durch eine Füllmaschine zum Herstellen von Würstchen aus einer pastösen Masse, wie Wurstbrät oder dergleichen mit einem Fülltrichter und einer Förderpumpe, die mit einer Vorrichtung zum Herstellen eines Stranges aus der pastösen Masse gekoppelt ist. Diesem Aspekt der Erfindung liegt die Erkenntnis zugrunde, dass eine Füllmaschine zum Herstellen von Würstchen aus pastöser Masse mit einer derartig erfindungsgemäß ausgebildeten Vorrichtung zum Herstellen eines Strangs bzw. Würstchen mit einer Hülle aus Alginat oder Collagen erzeugen kann, die eine gebogene Form aufweisen, wie es sonst nur Würstchen haben, die einen Naturdarm aufweisen. Mit der naturdarmähnlichen Formgebung erhalten die erzeugten Würstchen ein für den Kunden ansprechendes Äußeres, welches die Würstchen vorzugsweise auch bei ihrer Zubereitung beibehalten.

Bevorzugt sieht eine Ausführungsform der Erfindung vor, dass die Füllmaschine mindestens eine Abteilvorrichtung zum Abteilen des geformten und mit dem Hüllmaterial überzogenen Stranges in einzelne Strangabschnitte umfasst. Damit ist eine vorteilhaft einfache Möglichkeit zur Unterteilung des erzeugten Stranges in einzelne Abschnitte gewährleistet. Als Abteilvorrichtung kommt vorzugsweise eine Abdreh- oder Abtrennvorrichtung zum Einsatz, mithilfe denen jeweils das Abteilen der die späteren Würstchen ausbildenden Strangabschnitte vom Wurststrang auf sichere Weise möglich ist.

Die Erfindung löst die Aufgabe ferner durch ein Verfahren nach Anspruch 9 und ein Verfahren nach Anspruch 10 zum Herstellen von wenigstens einem Strang aus einer pastösen Masse, wie Wurstbrät oder dergleichen, bei dem die pastöse Masse, insbesondere Wurstbrät zu einem Strang vorbestimmter Länge verpresst wird, und dann der Strang zumindest mit einem Hüllmaterial überzogen wird, wobei vorgesehen ist, dass der mit dem Hüllmaterial überzogene Strang um ein vorbestimmtes Winkelmaß umgelenkt wird, wobei auf den Strang während des Umlenkvorgangs ein das Füllmaterial aushärtendes Auftragmittel aufgesprüht wird.

Mit einem derartig erfindungsgemäß ausgebildeten Verfahren kann auf vorteilhaft einfache Weise ein Strang aus einer pastösen Masse bzw. einzelne Strangabschnitte, welche auf Länge abgeteilte Würstchen ausbilden, eine gebogene Formgebung erhalten, die der Formgebung ähnelt, welche ein Strang aus einer pastösen Masse hat, der in einem Naturdarm eingefüllt wurde. Damit erhält bzw. erhalten der Wurststrang bzw. die einzelnen Würstchen ein für einen Verbraucher ansprechendes optisches Äußeres. Vorzugsweise wird auf die Strangoberfläche während des Umlenkvorganges ein das Hüllmaterial aushärtendes Auftragmittel aufgebracht.

Bevorzugt wird der Strang aus pastöser Masse um ein Winkelmaß von wenigstens 45° umgelenkt, um sicherzustellen, dass das auf das Hüllmaterial aufgebrachte Auftragmittel eine ausreichend lange Einwirkzeit zum Aushärten des Hüllmaterials hatte. Vorzugsweise wird der mit dem Hüllmaterial überzogene Strang wenigstens um einen Winkel von etwa 270° umgelenkt, bevor der Wurststrang wieder in eine gerade oder gestreckte Ausrichtung gebracht wird.

Während des Umlenkvorganges wird auf die Strangoberfläche, welche von Hüllmaterial gebildet wird, ein das Hüllmaterial aushärtendes Auftragmittel aufgebracht. Das Auftragmittel wird dabei vorzugsweise unmittelbar zu Beginn des Umlenkvorganges des Stranges auf das den Strang umhüllende Hüllmaterial aufgebracht, wodurch der Prozess des Aushärtens des Hüllmaterials auf der Oberfläche des Wurststranges verbessert wird. Vorzugsweise wird das Hüllmaterial in Umfangsrichtung des Wurststranges mit einer ungleichmäßigen Schichtdicke auf dessen Oberfläche aufgetragen. Durch das Umlenken und das damit verbundene Biegen des Wurststranges wird am Innenradius des Wurststranges eine Stauchung und am Außenradius des Wurststranges eine Dehnung erzeugt. In diesen Bereichen des Wurststranges aufgetragenes Hüllmaterial wird ebenfalls in gleicher Weise gedehnt bzw. gestaucht. Mit dem ungleichmäßigen Auftragen des Hüllmaterials über den Umfang soll das Dehnen bzw. Stauchen des Hüllmaterials auf den vorbestimmten Oberflächenbereichen ausgleichen werden, so dass dann ein gebogener fertiger Strang bzw. jeweils ein eine Krümmung aufweisender Strangabschnitt dann wiederrum eine gleichmäßige Schichtdicke an Hüllmaterial aufweist.

Im Folgenden wird die Erfindung anhand eines möglichen Ausführungsbeispiels unter Bezugnahme auf die beigefügten Figuren näher beschrieben. Hierbei zeigen:
- Figur 1: eine schematische Darstellung einer erfindungsgemäßen Vorrichtung zum Herstellen eines Stranges;
- Figur 2: eine schematische Darstellung eines verwendeten Extrusionskopfes;
- Figur 3: eine schematische Darstellung eines weiteren Ausführungsbeispiels eines Extrusionskopfes im Schnitt, und
- Figur 4: eine perspektivische Ansicht einer bevorzugten Ausführungsform der Vorrichtung.

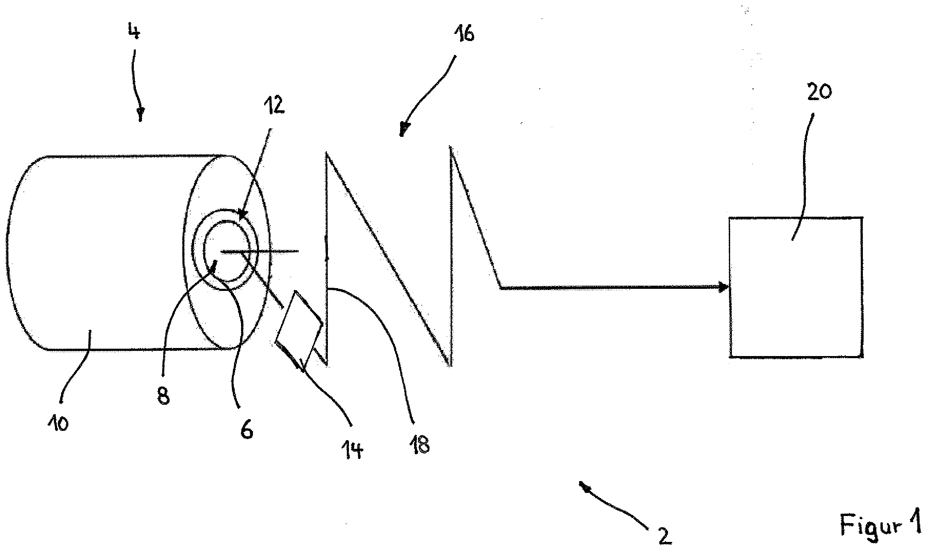

In Figur 1 ist eine Vorrichtung 2 zum Herstellen eines Stranges aus einer pastösen Masse, wie Wurstbrät oder dergleichen gezeigt, die einen Extrusionskopf 4 mit einer Förderleitung 6 für die zu einem Strang zu formende pastöse Masse aufweist. Die Förderleitung 6 weist einen nicht näher dargestellten Einlass und einen Auslass 8 auf, wobei über den Auslass 8 die zu einem Strang geformte pastöse Masse, auch bezeichnet als Wurststrang, aus dem Extrusionskopf 4 austritt.

In nicht näher dargestellter Weise wird der Exkursionskopf 4, genauer gesagt die Förderleitung 6 für die Masse, mit einer Füllmaschine gekoppelt, so dass aus der Füllmaschine die zu formende Masse in den Exkursionskopf 4 eingeleitet wird. Die Füllmaschine weist in an sich bekannter Weise einen Fülltrichter, eine Förderpumpe und Steuerungseinrichtungen auf.

Der Extrusionskopf 4 umfasst desweiteren eine Aufnahmekammer 10 für ein auf die Oberfläche des Wurststranges aufzubringendes Hüllmaterial auf, welches dann die äußere Schicht des Wurststranges ausbildet. Auf diese Weise ist eine Art Koextrusionskopf ausgebildet. Die das Hüllmaterial aufnehmende Aufnahmekammer 10 umschließt insbesondere einen Abschnitt der Förderleitung 6 und ist vorzugsweise koaxial zur Mittenachse der Förderleitung angeordnet. Die Aufnahmekammer 10 weist einen Auslauf 12 zum Aufbringen des Hüllmaterials auf, der bevorzugt dem Auslass 6 der Förderleitung zugeordnet ist. Das Hüllmaterial, welches bevorzugt beispielsweise Alginat oder Collagen aufweist, härtet nach dem Aufbringen auf der Oberfläche des Wurststranges nach einer vorbestimmten Zeitdauer aus und hat die Funktion, den Wurststrang zu verfestigen.

Um das Verfestigen des Hüllmaterials zu beschleunigen und damit die Wartezeit für eine Weiterverarbeitung zu verkürzen, wird bevorzugt auf das Hüllmaterial ein das Hüllmaterial verfestigendes Auftragmittel aufgebracht. Das Auftragen des Auftragmittels erfolgt mit einer Auftragseinrichtung 14, die in Förderrichtung hinter dem Extrusionskopf 4 angeordnet ist und einen gleichmäßig über den Umfang verteilten und zugleich kontinuierlichen Auftrag des Auftragsmittels gewährleisten soll.

Darüber hinaus ist an der erfindungsgemäßen Vorrichtung, damit der erzeugte Wurststrang bzw. die daraus später hergestellten Würstchen eine naturdarmähnliche Formgebung erhalten, in Förderrichtung hinter dem Extrusionskopf eine Umlenkeinrichtung 16 angeordnet, die den mit Hüllmaterial überzogenen Wurststrang auf eine vorgegebene, gekrümmte Bahn führt bzw. umlenkt, bis das Hüllmaterial verfestigt ist. Mit dem Verfestigen des Hüllmaterials erhält der Wurststrang eine Art Formgedächtnis, so dass der Wurststrang und die daraus herstellten Würstchen, wenn diese an ihren Enden nicht in Längsrichtung auf Zug beansprucht werden, gebogen bzw. gekrümmt sind. Die Umlenkeinrichtung 16 ist aus einem gekrümmten Rohrleitungsabschnitt 18 ausgebildet, dessen Krümmung einen Winkel von wenigstens 45° umfasst. Vorzugsweise weist der Rohrleitungsabschnitt 18 eine Krümmung von wenigstens 270° auf, womit sichergestellt ist, dass der Strang aus pastöser Masse erst wieder in eine gradlinige oder gestreckte Ausrichtung gebracht wird, nachdem das Hüllmaterial auf der Oberfläche des Wurststranges ausgehärtet ist.

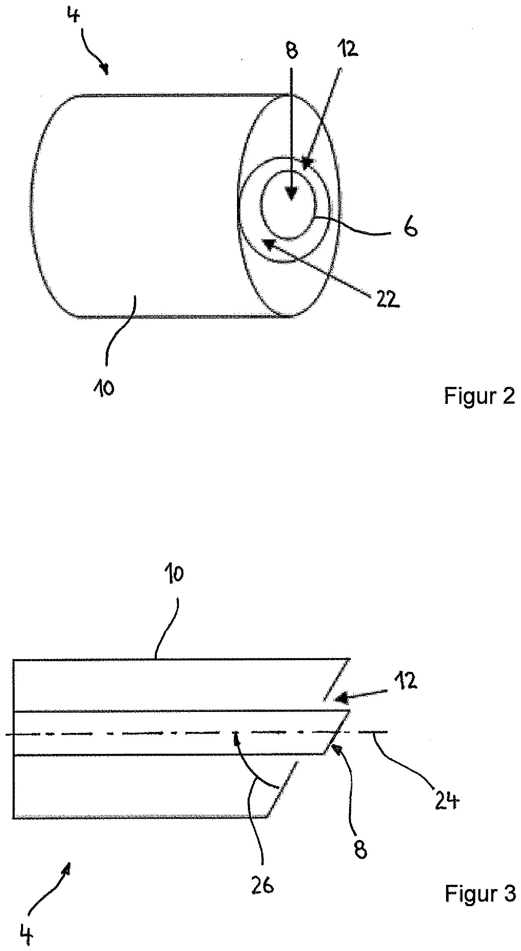

Der in Figur 1 gezeigte Rohrleitungsabschnitt 18 ist wendel- oder schraubenförmig ausgebildet, wobei der Rohrleitungsabschnitt vorzugsweise wenigstens eine ganze Windung mit einem Winkel von 360° ausführt. Die Auftragseinrichtung 14 für das Auftragmittel ist im ersten Drittel der Umlenkeinrichtung 16 angeordnet, wobei die Auftragseinrichtung als Sprüheinrichtung für das aufzutragende Auftragmittel ausgebildet ist. Zur Weiterverarbeitung wird der Wurststrang nach dem Passieren der Umlenkeinrichtung einer Abteileinrichtung 20 zugeführt, welche von dem erzeugten Wurststrang kontinuierlich Strangabschnitte vorbestimmter Länge abtrennt oder abdreht. Die Figuren 2 und 3 zeigen den Extrusionskopf 4 in einer Detailansicht, wobei Figur 2 verdeutlicht, dass der Auslauf 12 der Aufnahmekammer 10 als Ringspalt um das Ende der Förderleitung 6 ausgebildet ist, wobei der Ringspalt 22 asymmetrisch ist bzw. ein ungleichförmiges Spaltmaß über den Umfang aufweist. Damit wird im Moment des Auftrags des Hüllmaterials auf die Oberfläche des Stranges aus pastöser Masse eine Deckschicht mit einer in Umfangsrichtung varierenden Schichtdicke des Hüllmaterials erzeugt. Die unterschiedliche Schichtdicke wird dann nahezu während des Hindurchführens des Stranges innerhalb des gekrümmten Rohrleitungsabschnittes ausgeglichen, da das Hüllmaterial im Bereich des Innenradius gestaucht und im Bereich des Außenradius auseinandergezogen bzw. gedehnt wird.

In Figur 3 ist ein weiteres Ausführungsbeispiel des Extrusionskopfes im Schnitt gezeigt, dessen Endbereich schräg verlaufend zur Mittenachse der Förderleitung 6 und der sich um die Förderleitung abschnittsweise erstreckenden Aufnahmekammer 10 ausgebildet ist. Der Auslass 8 der Förderleitung 6 und der Auslauf 12 der Aufnahmekammer 10 weisen Auslass- bzw. Auslauföffnungen auf, deren mittels der Auslass- bzw. Auslauföffnungen ausgebildeten Ebenen jeweils in einem Winkel kleiner oder größer 90° zur Mittenachse 24 der Förderleitung ausgerichtet sind. Dadurch kann der Wurststrang unmittelbar mit dem Austreten aus dem Extrusionskopf 4 um ein vorbestimmtes Winkelmaß Pfeil 26 umgelenkt werden. Der in Förderrichtung hinter dem Extrusionskopf 4 angeordnete Rohrleitungsabschnitt 18 ist mit dem Extrusionskopf 4 direkt verbunden oder im Abstand zum Endbereich des Extrusionskopfes 4 angeordnet. Der Auslassbereich des Extrusionskopfes 4 ist dabei fluchtend zur Eintrittsöffnung des nicht näher dargestellten Rohrleitungsabschnittes 18 angeordnet.

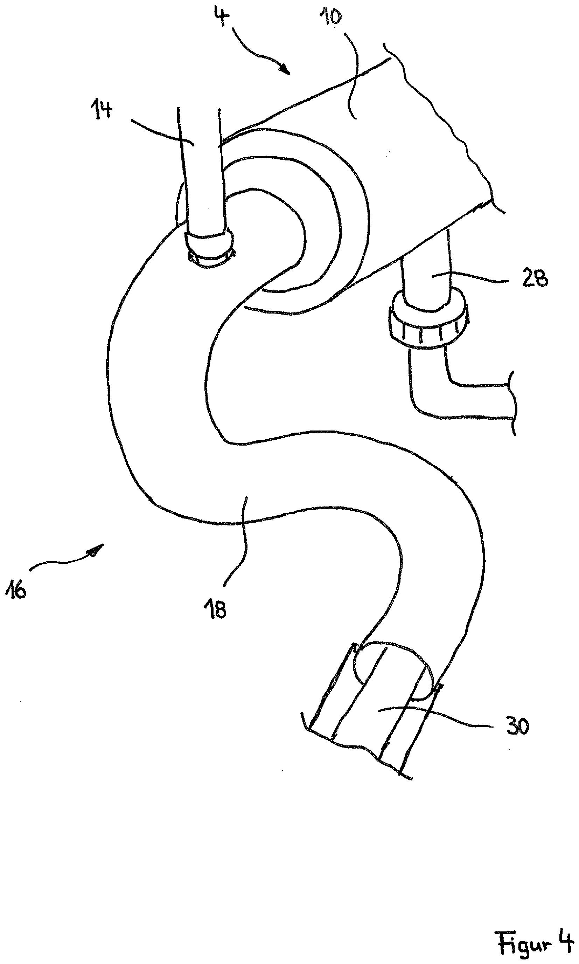

Figur 4 zeigt ein bevorzugtes Ausführungsbeispiel der erfindungsgemäßen Vorrichtung 2, welche eine unmittelbar mit dem Extrusionskopf 4 verbundene bzw. gekoppelte Umlenkeinrichtung 16 aufweist. Am Extrusionskopf 4 ist eine Zuleitung 28 angeordnet, über die das auf den Wurststrang aufzubringende Hüllmaterial in die Aufnahmekammer 10 des Extrusionskopfes 4 eingeleitet wird. Die Umlenkeinrichtung 16 weist einen Rohrleitungsabschnitt 18 auf, der wie Figur 4 verdeutlicht, aus zwei Rohrabschnitten ausgebildet ist, die unterschiedliche Krümmungsverläufe haben. Die Krümmungsverläufe erstrecken sich in etwa senkrecht aufeinander stehenden Ebenen, wobei jeder Rohrabschnitt einen Krümmungswinkel von ungefähr 180° aufweist. Der Rohrleitungsabschnitt 18 ist in der vorliegenden Ausführungsform vorzugsweise einstückig ausgebildet. Wie Figur 4 weiterhin zu entnehmen, ist die Auftragseinrichtung 14 in einem Abstand hinter der Eintrittsöffnung des Rohrleitungsabschnittes angeordnet, der etwa einem Zehntel der Gesamtlänge des Rohrleitungsabschnittes 18 entspricht. Zur Weiterverarbeitung wird der am Ende aus der Umlenkeinrichtung 16 austretende Wurststrang 30 zunächst in gestreckter Ausrichtung weitergeführt.

## Patentansprüche

1. Vorrichtung (1) zum Herstellen eines Stranges aus einer pastösen Masse, wie Wurstbrät oder dergleichen,
mit zumindest einem Extrusionskopf (4),
der wenigstens eine Förderleitung (6) für die zu einem Strang zu formende pastöse Masse aufweist, wobei die Förderleitung (6) einen Einlass und einen Auslass (8) aufweist, und
der eine Aufnahmekammer (10) für ein auf den Strang aufzubringendes Hüllmaterial aufweist, wobei die Aufnahmekammer (10) einen Einlauf für das Hüllmaterial und einen Auslauf (12) zum Aufbringen des Hüllmaterials auf die Strangoberfläche aufweist, und wobei in Förderrichtung hinter dem Extrusionskopf (4) eine Umlenkeinrichtung (16) angeordnet ist, die dazu eingerichtet ist, den mit Hüllmaterial überzogenen Strang in eine vorbestimmte Krümmung zu bringen,
**gekennzeichnet durch** eine Auftragseinrichtung (14) zum Aufbringen eines das Hüllmaterial verfestigenden Auftragmittels auf den Wurststrang, welche in Förderrichtung stromabwärts des Extrusionskopfes (4) angeordnet ist, wobei die Auftragseinrichtung (14) als Sprüheinrichtung für das das Hüllmaterial auf dem Strang verfestigende Auftragmittel ausgebildet und entlang eines Abschnittes der Umlenkeinrichtung (16) angeordnet ist,
wobei die Umlenkeinrichtung (16) einen wendel- oder schraubenförmig gekrümmten Rohrleitungsabschnitt (18) aufweist, dessen Krümmung einen Winkel von wenigstens 45° aufweist.

2. Vorrichtung (1) zum Herstellen eines Stranges aus einer pastösen Masse, wie Wurstbrät oder dergleichen,
mit zumindest einem Extrusionskopf (4),
der wenigstens eine Förderleitung (6) für die zu einem Strang zu formende pastöse Masse aufweist, wobei die Förderleitung (6) einen Einlass und einen Auslass (8) aufweist, und
der eine Aufnahmekammer (10) für ein auf den Strang aufzubringendes Hüllmaterial aufweist, wobei die Aufnahmekammer (10) einen Einlauf für das Hüllmaterial und einen Auslauf (12) zum Aufbringen des Hüllmaterials auf die Strangoberfläche aufweist, und wobei in Förderrichtung hinter dem Extrusionskopf (4) eine Umlenkeinrichtung (16) angeordnet ist, die dazu eingerichtet ist, den mit Hüllmaterial überzogenen Strang in eine vorbestimmte Krümmung zu bringen,
**gekennzeichnet durch** eine Auftragseinrichtung (14) zum Aufbringen eines das Hüllmaterial verfestigenden Auftragmittels auf den Wurststrang, welche in Förderrichtung stromabwärts des Extrusionskopfes (4) angeordnet ist, wobei die Auftragseinrichtung (14) als Sprüheinrichtung für das das Hüllmaterial auf dem Strang verfestigende Auftragmittel ausgebildet und entlang eines Abschnittes der Umlenkeinrichtung (16) angeordnet ist,
wobei die Umlenkeinrichtung (16) einen gekrümmten Rohrleitungsabschnitt (18) aufweist, dessen Krümmung einen Winkel von wenigstens 45° aufweist, wobei der Rohrleitungsabschnitt (18) aus zwei Rohrabschnitten gebildet ist, die Krümmungsverläufe aufweisen, welche sich in etwa senkrecht aufeinander stehenden Ebenen erstrecken.

3. Vorrichtung (1) nach mindestens einem der vorstehenden Ansprüche ,
wobei die Auftragseinrichtung (14) im Bereich des ersten Drittels der Umlenkeinrichtung (16) angeordnet ist.

4. Vorrichtung (1) nach einem der Ansprüche 1 bis 3,
**dadurch gekennzeichnet, dass** der Auslauf der Aufnahmekammer (10) dem Auslass (8) Förderleitung (6) zugeordnet ist.

5. Vorrichtung (1) nach einem der vorstehenden Ansprüche,
**dadurch gekennzeichnet, dass** der Auslauf (12) ein Ringspalt (22) ist, der sich in axialer Richtung zwischen dem Endabschnitt der Förderleitung (6) und einem im Abstand dazu angeordneten, in radialer Richtung verlaufenden Wandungsteil der Aufnahmekammer (10) erstreckt, und dass der Ringspalt (22) in Umfangsrichtung ein ungleichförmiges Spaltmaß aufweist.

6. Vorrichtung (1) nach einem der vorstehenden Ansprüche,
**dadurch gekennzeichnet, dass** die Förderleitung (6) einen Auslass (8) und die Aufnahmekammer (10) einen Auslauf (12) aufweisen, deren Auslass- bzw. Auslauföffnungen jeweils in einem Winkel kleiner oder größer 90° zur Mittenachse (24) der Förderleitung (6) ausgerichtet sind.

7. Vorrichtung (1) nach mindestens einem der vorstehenden Ansprüche,
**gekennzeichnet durch** eine Füllmaschine zum Herstellen von Würstchen aus einer pastösen Masse,
mit einem Fülltrichter zum Aufnehmen der Masse, und einer Förderpumpe zum Fördern der Masse zu der Vorrichtung (1)
die mit der mit der Vorrichtung (1) zum Herstellen eines Stranges aus der pastösen Masse gekoppelt ist.

8. Vorrichtung nach Anspruch 7,
**gekennzeichnet durch** mindestens eine Abteilvorrichtung (20) zum Abteilen des geformten und mit dem Hüllmaterial überzogenen Stranges in einzelne Strangabschnitte.

9. Verfahren zum Herstellen von wenigstens einem Strang aus einer pastösen Masse, wie Wurstbrät oder dergleichen, bei dem
die pastöse Masse, insbesondere Wurstbrät, zu einem Strang vorbestimmter Länge verpresst wird, und
dann der Strang zumindest mit einem Hüllmaterial überzogen wird,
wobei der mit dem Hüllmaterial überzogene Strang um ein vorbestimmtes Winkelmaß umgelenkt wird
**dadurch gekennzeichnet, dass** auf den Strang während des Umlenkvorganges ein das Hüllmaterial aushärtendes Auftragmittel aufgesprüht wird und
wobei der Strang aus pastöser Masse um ein Winkelmaß von wenigstens 45° mittels einer Umlenkeinrichtung (16) umgelenkt wird, die einen wendel- oder schraubenförmig gekrümmten Rohrleitungsabschnitt (18) aufweist.

10. Verfahren zum Herstellen von wenigstens einem Strang aus einer pastösen Masse, wie Wurstbrät oder dergleichen, bei dem
die pastöse Masse, insbesondere Wurstbrät, zu einem Strang vorbestimmter Länge verpresst wird, und
dann der Strang zumindest mit einem Hüllmaterial überzogen wird,
wobei der mit dem Hüllmaterial überzogene Strang um ein vorbestimmtes Winkelmaß umgelenkt wird
**dadurch gekennzeichnet, dass** auf den Strang während des Umlenkvorganges ein das Hüllmaterial aushärtendes Auftragmittel aufgesprüht wird und
wobei der Strang aus pastöser Masse um ein Winkelmaß von wenigstens 45° mittels einer Umlenkeinrichtung (16) umgelenkt wird, die einen gekrümmten Rohrleitungsabschnitt (18) aufweist, der aus zwei Rohrabschnitten gebildet ist, die Krümmungsverläufe aufweisen, welche sich in etwa senkrecht aufeinander stehenden Ebenen erstrecken.

11. Verfahren nach einem der Ansprüche 9 oder 10,
wobei das Auftragmittel vorzugsweise unmittelbar mit Beginn oder kurz nach Beginn des Umlenkvorganges des Stranges auf das den Strang umhüllende Hüllmaterial aufgebracht wird.

12. Verfahren nach einem der Ansprüche 9 bis 11,
**dadurch gekennzeichnet, dass** das Hüllmaterial in Umfangsrichtung des Stranges mit einer ungleichmäßigen Schichtdicke auf dessen Oberfläche aufgetragen wird.

13. Verfahren nach einem der Ansprüche 9 bis 12,
**dadurch gekennzeichnet, dass** das Auftragmittel zumindest eine Calciumlösung umfasst.

## Claims

1. Apparatus (1) for producing a string from a pasty material like sausagemeat or the like comprising
at least an extrusion head (4)
which has at least one conveyor conduit (6) for the pasty material to be shaped into a string, wherein the conveyor conduit (6) has an inlet and an outlet (8), and
which has a receiving chamber (10) for a casing material to be applied to the string, wherein the receiving chamber (10) has an entry for the casing material and an exit (12) for applying the casing material to the string surface, and
wherein arranged downstream of the extrusion head (14) in the conveyor direction is a deflection device (16) adapted to put the string covered with casing material into a predetermined curvature,
**characterised by** an applicator device (14) for applying an application agent for setting of the casing material to the sausage string, the applicator device being arranged downstream of the extrusion head (4), wherein the applicator device (14) is in the form of a spray device for the application agent for causing setting of the casing material on the string and is arranged along a portion of the deflection device (16),
wherein the deflection device (16) has a coil-shaped or helically curved pipe conduit portion (18) whose curvature has an angle of at least 45°.

2. Apparatus (1) for producing a string from a pasty material like sausagemeat or the like comprising
at least an extrusion head (4),
which has at least one conveyor conduit (6) for the pasty material to be shaped into a string, wherein the conveyor conduit (6) has an inlet and an outlet (8), and
which has a receiving chamber (10) for a casing material to be applied to the string, wherein the receiving chamber (10) has an entry for the casing material and an exit (12) for applying the casing material to the string surface, and
wherein arranged downstream of the extrusion head (14) in the conveyor direction is a deflection device (16) adapted to put the string covered with casing material into a predetermined curvature,
**characterised by** an applicator device (14) for applying an application agent for setting of the casing material to the sausage string, the applicator device being arranged downstream of the extrusion head (4), wherein the applicator device (14) is in the form of a spray device for the application agent for causing setting of the casing material on the string and is arranged along a portion of the deflection device (16),
wherein the deflection device (16) has a curved pipe conduit portion (18), whose curvature has an angle of at least 45°, wherein the pipe conduit portion (18) is formed from two pipe portions which have curvature configurations which extend in approximately mutually perpendicular planes.

3. Apparatus (1) as set forth in at least one of the preceding claims,
wherein the applicator device (14) is arranged in the region of the first third of the deflection device (16).

4. Apparatus (1) as set forth in one of claims 1 through 3,
**characterised in that** the exit of the receiving chamber (10) is associated with the outlet (8) of the conveyor conduit (6).

5. Apparatus (1) as set forth in one of the foregoing claims,
**characterised in that** the exit (12) is an annular gap (22) which extends in the axial direction between the end portion of the conveyor conduit (6) and a wall portion of the receiving chamber (10), that is arranged at a spacing relative thereto and extends in the radial direction, and the annular gap (22) is of an irregular gap dimension in the peripheral direction.

6. Apparatus (1) as set forth in the foregoing claims,
**characterised in that** the conveyor conduit (6) has an outlet (8) and the receiving chamber (10) has an exit (12), whose outlet and exit openings respectively are oriented at an angle less than or greater than 90° relative to the center line (24) of the conveyor conduit (6).

7. Apparatus (1) as set forth in at least one of the preceding claims
**characterised by** a filling machine for producing sausages from a pasty material, comprising a filling hopper for receiving the material and a delivery pump for conveying the material to the apparatus (1),
which is coupled to the apparatus (1) for producing a string from the pasty material.

8. Apparatus as set forth in claim 7,
**characterised by** at least one dividing device (20) for dividing the shaped string covered with the casing material into individual string portions.

9. A process for producing at least one string of a pasty material like sausagemeat or the like in which
the pasty material, in particular sausagemeat, is pressed into a string of predetermined length, and
then the string is covered at least with a casing material,
wherein the string covered with the casing material is deflected through a predetermined angle,
**characterised in that** an application agent for hardening the casing material is applied to the string during the deflection procedure, and
wherein the string of pasty material is deflected through an angle of at least 45° by a deflection device (16), having a coil-shaped or helically curved pipe conduit portion (18).

10. A process for producing at least one string of a pasty material like sausagemeat or the like in which
the pasty material, in particular sausagemeat, is pressed into a string of predetermined length, and
then the string is covered at least with a casing material,
wherein the string covered with the casing material is deflected through a predetermined angle,
**characterised in that** an application agent for hardening the casing material is applied to the string during the deflection procedure, and
wherein the string of pasty material is deflected through an angle of at least 45° by a deflection device (16), having a curved pipe conduit portion (18), being formed from two pipe portions which have curvature configurations which extend in approximately mutually perpendicular planes.

11. A process as set forth in one of claims 9 or 10
wherein the application agent is applied to the casing material enclosing the string preferably immediately at the beginning or shortly after the beginning of the string deflection procedure.

12. A process as set forth in one of claims 9 through 11
**characterised in that** the casing material is applied to the string surface in the peripheral direction of the string with an irregular layer thickness.

13. A process as set forth in one of claims 9 through 12
**characterised in that** the application agent includes at least a calcium solution.

## Revendications

1. Dispositif (1) servant à fabriquer un boyau à partir d'une masse pâteuse, telle que de la chair à saucisse ou similaire,
avec au moins une tête d'extrusion (4),
qui présente au moins une conduite de refoulement (6) pour la masse pâteuse à façonner un en boyau, dans lequel la conduite de refoulement (6) présente une entrée et une sortie (8), et
qui présente une chambre de réception (10) pour un matériau enveloppant à appliquer sur le boyau, dans lequel la chambre de réception (10) présente une arrivée pour le matériau enveloppant et une évacuation (12) servant à appliquer le matériau enveloppant sur la surface de boyau, et dans lequel est disposé, dans la direction de refoulement, derrière la tête d'extrusion (4), un système de renvoi (16), qui est mis au point pour conférer au boyau recouvert du matériau enveloppant une incurvation prédéfinie,
**caractérisé par** un système d'application (14) servant à appliquer un moyen d'application renforçant le matériau enveloppant sur le boyau de saucisse, lequel est disposé dans la direction de refoulement en aval de la tête d'extrusion (4), dans lequel le système d'application (14) est réalisé sous la forme d'un système de pulvérisation pour le moyen d'application renforçant le matériau enveloppant sur le boyau et est disposé le long d'une section du système de renvoi (16),
dans lequel le système de renvoi (16) présente une section de conduite incurvée à la manière d'une hélice ou d'une vis, dont l'incurvation présente un angle d'au moins 45°.

2. Dispositif (1) servant à fabriquer un boyau à partir d'une masse pâteuse, telle que de la chair à saucisses ou similaire,
avec au moins une tête d'extrusion (4),
qui présente au moins une conduite de refoulement (6) pour la masse pâteuse à façonner en un boyau, dans lequel la conduite de refoulement (6) présente une entrée et une sortie (8), et
qui présente une chambre de réception (10) pour un matériau enveloppant à appliquer sur le boyau, dans lequel la chambre de réception (10) présente une arrivée pour le matériau enveloppant et une évacuation (12) servant à appliquer le matériau enveloppant sur la surface de boyau, et dans lequel est disposé, dans la direction de refoulement, derrière la tête d'extrusion (4), un système de renvoi (16), qui est mis au point pour conférer au boyau recouvert du matériau enveloppant une incurvation prédéfinie,
**caractérisé par** un système d'application (14) servant à appliquer un moyen d'application renforçant le matériau enveloppant sur le boyau de saucisse, lequel est disposé dans la direction de refoulement en aval de la tête d'extrusion (4), dans lequel le système d'application (14) est réalisé sous la forme d'un système de pulvérisation pour le matériau d'application renforçant le matériau enveloppant sur le boyau et est disposé le long d'une section du système de renvoi (16),
dans lequel le système de renvoi (16) présente une section de conduite (18) incurvée, dont l'incurvation présente un angle d'au moins 45°, dans lequel la section de conduite (18) est formée à partir de deux sections tubulaires, qui présentent des profils incurvés, qui s'étendent dans des plans à peu près perpendiculaires les uns aux autres.

3. Dispositif (1) selon au moins l'une quelconque des revendications précédentes,
dans lequel le système d'application (14) est disposé dans la zone du premier tiers du système de renvoi (16).

4. Dispositif (1) selon l'une quelconque des revendications 1 à 3,
**caractérisé en ce que** l'évacuation de la chambre de réception (10) est associée à la sortie (8) de la conduite de refoulement (6).

5. Dispositif (1) selon l'une quelconque des revendications précédentes,
**caractérisé en ce que** l'évacuation (12) est une fente annulaire (22), qui s'étend dans une direction axiale entre la section d'extrémité de la conduite de refoulement (6) et une partie de paroi, disposée à distance de cette dernière, s'étendant dans une direction radiale, de la chambre de réception (10), et que la fente annulaire (22) présente dans la direction périphérique une dimension de fente irrégulière.

6. Dispositif (1) selon l'une quelconque des revendications précédentes,
**caractérisé en ce que** la conduite de refoulement (6) présente une sortie (8) et la chambre de réception (10) présente une évacuation (12), dont les ouvertures de sortie ou d'évacuation sont orientées respectivement selon un angle inférieur ou supérieur à 90° par rapport à l'axe central (24) de la conduite de refoulement (6).

7. Dispositif (1) selon au moins l'une quelconque des revendications précédentes,
**caractérisé par** une machine de remplissage servant à fabriquer des petites saucisses à partir d'une masse pâteuse,
avec une trémie de remplissage servant à recevoir la masse, et une pompe de refoulement servant à refouler la masse en direction du dispositif (1),
qui est couplée au dispositif (1) servant à fabriquer un boyau à partir de la masse pâteuse.

8. Dispositif selon la revendication 7, **caractérisé par** au moins un dispositif de segmentation (20) servant à segmenter le boyau façonné et recouvert du matériau enveloppant en diverses sections de boyau.

9. Procédé servant à fabriquer au moins un boyau à partir d'une masse pâteuse, telle que de la chair à saucisse ou similaire, dans lequel
la masse pâteuse, en particulier la chair à saucisse, est comprimée en un boyau de longueur prédéfinie, et
le boyau est alors recouvert au moins d'un matériau enveloppant,
dans lequel le boyau recouvert du matériau enveloppant est renvoyé selon un angle présentant une dimension prédéfinie,
**caractérisé en ce qu'**un moyen d'application durcissant le matériau enveloppant est pulvérisé sur le boyau au cours de l'opération de renvoi, et
dans lequel le boyau composé d'une masse pâteuse est renvoyé selon un angle présentant une dimension d'au moins 45° au moyen d'un système de renvoi (16), qui présente une section de conduite (18) incurvée présentant une forme d'hélice ou de vis.

10. Procédé servant à fabriquer au moins un boyau à partir d'une masse pâteuse, telle que de la chair à saucisse ou similaire, dans lequel
la masse pâteuse, en particulier la chair à saucisse, est comprimée en un boyau de longueur prédéfinie, et
le boyau est alors recouvert au moins d'un matériau enveloppant,
dans lequel le boyau recouvert du matériau enveloppant est renvoyé selon un angle présentant une dimension prédéfinie,
**caractérisé en ce qu'**un moyen d'application durcissant le matériau enveloppant est pulvérisé sur le boyau au cours de l'opération de renvoi, et
dans lequel le boyau composé d'une masse pâteuse est renvoyé selon un angle présentant une dimension d'au moins 45° au moyen d'un système de renvoi (16), qui présente une section de conduite (18) incurvée, qui est formé à partir de deux sections tubulaires, qui présentent des profils incurvés, qui s'étendent dans des plans à peu près perpendiculaires les uns par rapport aux autres.

11. Procédé selon l'une quelconque des revendications 9 ou 10,
dans lequel le moyen d'application est appliqué sur le matériau enveloppant enveloppant le boyau de préférence directement dès le début ou peu après le début de l'opération de renvoi du boyau.

12. Procédé selon l'une quelconque des revendications 9 à 11,
**caractérisé en ce que** le matériau enveloppant est appliqué dans la direction périphérique du boyau sur sa surface avec une épaisseur de couche irrégulière.

13. Procédé selon l'une quelconque des revendications 9 à 12,
**caractérisé en ce que** le moyen d'application comprend au moins une solution de calcium.
